# EUROPEAN PATENT APPLICATION

(11) **EP 2 112 423 A1**
(43) Date of publication of application: **28.10.2009**
(21) Application number: 08102903.5
(22) Date of filing: 25.04.2008
(51) Int. Cl.: F17C 1/16, B29C 70/86, B29C 49/58, B29C 53/60

(54) **Multilayer container for liquids and gases storing under the elevated pressure and method of production thereof**

(71) Applicant: Sakowsky, Jon, Monkton, MD 21111 (US); Rydarowski, Henryk, 40-166 Katowice (PL); Moskwa, Krzysztof, 34-120 Andrychów (PL); Saferna, Adam, 34-122 Wieprz (PL)
(72) Inventor: Rydarowski, Henryk, 40-166 Katowice (PL); Moskwa, Krzysztof, 34-120 Andrychów (PL); Saferna, Adam, 34-122 Wieprz (PL)
(74) Representative: Rumpel, Alicja

(57) **Abstract**

The method of manufacturing of multi-layer container, especially to store liquids and pressurized gases, in the first stage of which the component made out of thermoplastic material being the preform (1) is manufactured and such the preform (1) is provided with the joint connection pipe (2a) with the thread (3a), and the dimension of the joint connection pipe (2a) of the preform (1) and the shape of the thread (3a) corresponds to the dimension of the joint connection pipe (2) of the container and to the shape of the thread (3) of the container (8).
In the second stage, the manufactured preform (1) is being thermally plasticized and to this end it is placed on the arbor (6) and then heated in the furnace to a temperature close to the plasticization temperature of this material, from which the preform is made and the joint connection pipe (2a) placed directly on the arbor (6) is being surrounded with the casing (4).

## Description

The subject-matter of the invention is the method of manufacturing of the container characterized in high resistance to effects of pressure produced by medium accumulated in its inside, and the container itself manufactured in accordance with the invention, to be applied for storage of liquids and gases under higher pressure.

Commonly known and applicable are methods introduced into manufacturing of packages and containers to be used for storage of substances in all states of aggregation, made out of plastics. However, it happens frequently that the substance contained in the container, due to its own physical and chemical properties and as a result of interactions with the environment, first of all because of changeable thermal conditions, changes its state of aggregation or as a result of such reactions, gases are liberated from the stored substance increasing pressure on the container walls.

That is why in many cases we give up manufacturing of containers to be used for storage of such substances with the application of form gluing. Such a method consists in manufacturing of several elements of the final product, which are then glued or welded edgewise contact edges of individual elements. This method enables placement of additional stiffeners into the inside of the product, which are especially required in case of squeezed (crushed) containers. In case of burst containers (bursting with the medium in its inside), more efficient are containers manufactured as a whole. In this case forces tangent to the walls of the container acting outwards, unseal the container in points where elements of the form have been joined.

A relatively simple solution is placing of the described container inside another, more resistant container. This may be accomplished in the way described in the patent application No P-312662 i.e. by placing the plastic container in the inside of the steel basket, which braids outside planes of the container. Nevertheless, it should be underlined that application of metals considerably increases weight of the final product and, at the same time, decreases weight of the medium which can be put into the container.

Such reinforcement can be also made by means of laminating, the method consisting in placement of additional layer of fibres on a surface of the product, which are wrapped and joined with the product surface with resin. This method of increasing strength of construction has been presented e.g. in the patent No PL 168196.

The method of reinforcing construction of the container operating under high pressures acting on its walls out of the inside, is also known and it has been disclosed in the Polish patent No PL 184943. In order to increase resistance of the container made out of plastic by means of joining the elements of the container form, the container is wrapped with fibres (snarls), which are arranged on the surface of the container in a way resulting in increase of its resistance to stresses.

Next, in the Polish patent No PL - 197773 the method of manufacturing of the plastic container operating under high pressures has been disclosed. This method consists in strengthening of the container construction by laminating of its walls. In the course of laminating, in points of connection hole/ holes flanged inserts are placed, which are provided with at least two gaskets. They ensure that the container is resistant to changeable thermal and mechanical conditions during its exploitation.

The method according to the American patent application No US 20050167433 is also known, which consists in covering the preform, manufactured by means of blow moulding, with the additional coating which is tightened around the internal container. It is also possible to perform lamination with separate fibres - threads padded and entangled on the surface of the container. As it has been disclosed in the document No US20050077643, bobbins with fibres on them turn around the container under movement, creating a net with the pattern adjusted to the working conditions of the final product.

During the operation of reinforcing of the outside surfaces of plastic containers, joint connection pipes are also fixed. Taking into consideration pressure ranges within which such a connection should operate, joint connection pipes are made out of metal resistant to further treatment, especially under high temperatures. Additionally, in the area of metal/plastic connection, gaskets (PL-197773) are placed which on the successive stage of treatment and lamination are being pressed to individual layers of the product and ensure tightness of connection.

It is exceptionally important that a free edge of the joint connection preserves its ideal form during laminating and heat treatment and is not subject to any deformations, which may result in deterioration in the final product tightness.

The method enabling to avoid possible negative effects, resulting from defective metal/plastic connection, consists in manufacturing of the whole container as well as of the joint connection from one kind of material and its successive covering with reinforcing structure by means of laminating. On the other hand, in order to ensure tightness of the final product it is important that the joint connection pipe until the moment of introduction into the process retains an ideal form of thread and free edge contacting the sealing or the screw cap closing the container.

The method of manufacturing of high-pressure container in accordance with the invention enables production of the container resistant to effects of significant bursting forces acting in the container, the outer surface of which is reinforced by means of laminating, protecting the containers against bursting in case of increase of internal pressure and against mechanical damages from outside.

The method according to the invention in the first stage includes manufacturing of a component being a preform of the future container. Such preform is made out of thermoplastic material, preferably PET material. The preform is provided with the threaded joint connection pipe. Dimension of the joint connection pipe of the preform and the shape of the thread corresponds to the dimension of the joint connection pipe of the container and to the shape of the container thread. Preferably, the thread of the joint connection pipe is made on the internal surface of the joint connection pipe. Preferably, the preform is made in a way ensuring manufacturing of the final product with the application of the method of blow moulding of the preform. Preferably, thermoplastic properties of the material should enable repeatable plasticization and solidification of this material. Preferably, when in the process of the preform manufacturing conditions in the entire volume of the material injected into the form are homogeneous.

In the second stage, the manufactured preform is being thermally plasticized. To this end, the preform is placed on the arbor stabilizing its position in the course of the successive treatment. Preferably, the stabilizing arbor functions as the blowing nozzle 5. The joint connection situated on the arbor/nozzle is surrounded with the casing, preferably cooled. Preferably, the casing has a shape of the flange surrounding the joint connection pipe. Preferably, this flange constitutes the construction element of the furnace, in which blow moulding of the preform is carried out. Preferably, the cooling flange is made in such a way, that in its inside a liquid coolant is flowing, in particular this is water. Preferably, when before being placed in a zone of blow moulding, the preform is pre-heated to a temperature close to the plasticization temperature of this material, from which the preform is made. Preferably, if in the whole furnace where blow moulding takes place it is possible to control temperatures in its different zones. Preferably, zones of heating the preform are arranged in such a way, that they enable adjustment of final product properties.

In the third stage, after plasticizing pre-heating, the preform is being placed on the blowing nozzle 5, with the flange collecting heat received from the joint connection pipe and it is placed between at least two elements of the form, in which blow moulding of the preform is carried out. Next, elements of the form are being closed and through the blowing nozzle, gas is pumped into the inside of the preform. Preferably, this gas is air. Preferably, that in the course of blow moulding, heat is taken back from the preform in an active way. Preferably, the form in which blow moulding is carried out, is cooled. Preferably, cooling is realized through the liquid flow. Preferably, this liquid is water.

In the fourth stage, after the blow moulded preform has left the form and the furnace, the inside of the formed container is filled with gas, which stiffens surfaces of the container, preventing them from indentation into the inside of the container. Value of pressure inside the container is strictly adjusted and it is preferably not less than 2 bars. This stage of the manufacturing process being run in accordance with the invention is, at the same time, considered to be the stage of quality control of the manufactured container. It is possible to connect to the valve pumping the gas, a manometric indicator to check leak tightness of the container. In another alternative method according to the invention, the bottom of the container is provided with the fixing profile, which enables fastening of the container during reinforcing.

In the fifth stage, after the inside of the container has been filled with the pressurized gas, the container is submitted to the operation of reinforcement of its outside surface by means of winding fibres impregnated with resin. Preferably, when during reinforcement of the outer surface hardening resins containing fibres from the following set of fibres: glass or carbon or aramid or basalt or ceramide or several kinds of the above fibres at the same time are used. Preferably, when reinforcing is being performed at least once and with the application of at least two methods from among three considered as optimal for the method in accordance with the invention. These methods are: cross method consisting in simultaneous rotation of the container or the winding head around the container and shift of the head alongside the length of the container reaching an angle of inclination falling within the range from 49° up to 59°, the second method is a polar method according to which fibre is wound when the winding head moves between the poles of the container, and the above fibre passes every time around the joint connection.

The third method of fibre winding is helical method, consisting in reinforcement of the cylindrical part of the container.

Individual packages of fibres are separated with a layer of resin from the set of polyester or epoxy resins. Depending on the kind of the used resin, the container wrapped with fibre passes to the furnace with the purpose to harden resin or to initiate chemical reaction resulting in hardening of laminate.

In the sixth stage, after the resin has been hardened, the container is covered with the coating protecting it against action of UV radiation, water, chemical substances and making it impact strength.

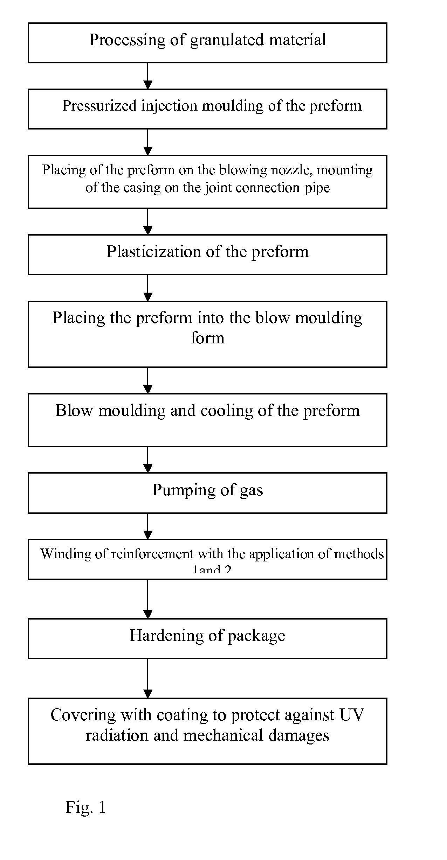

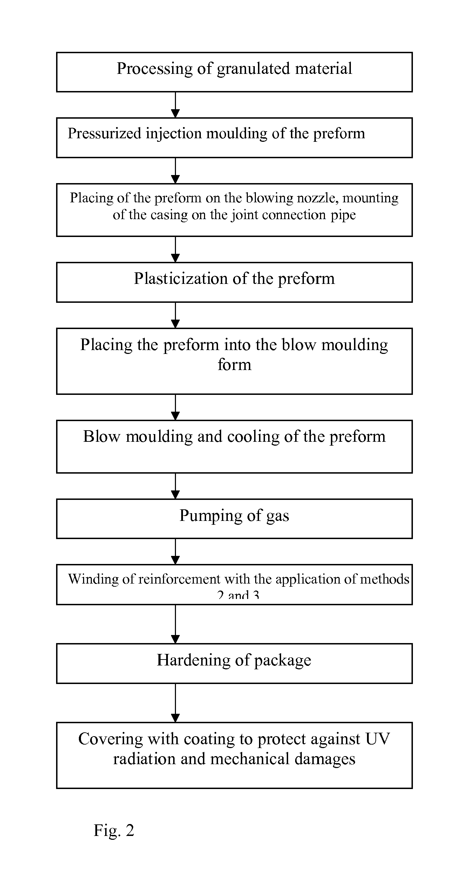

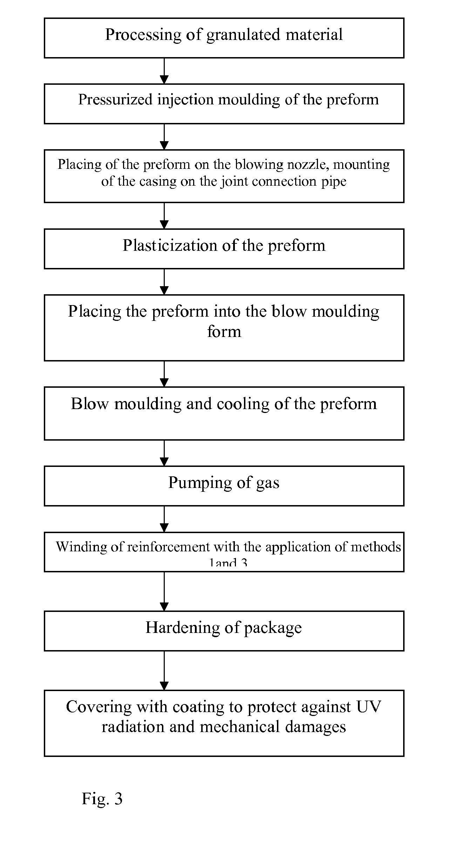

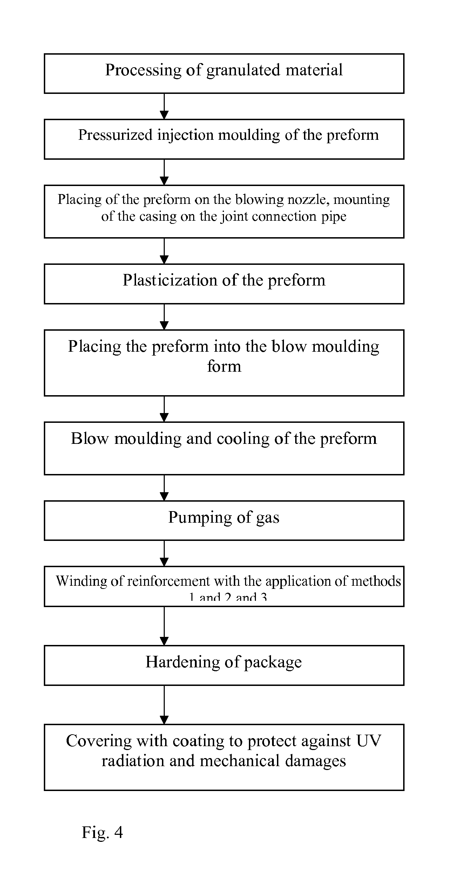

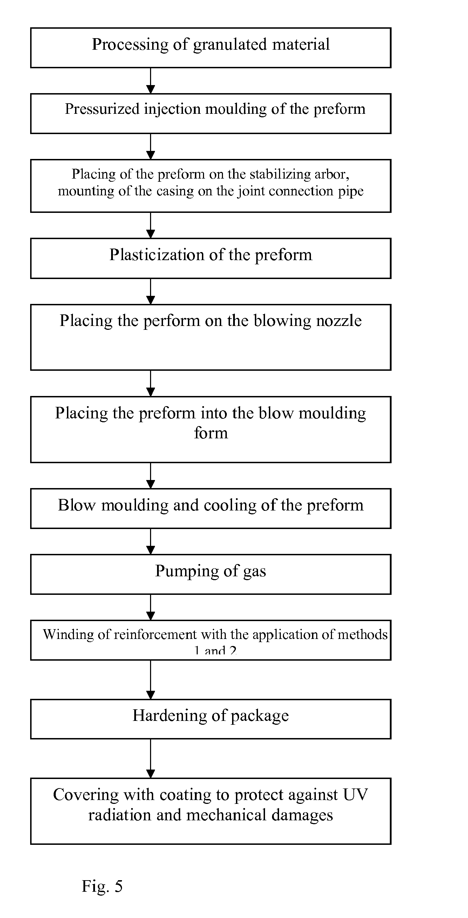

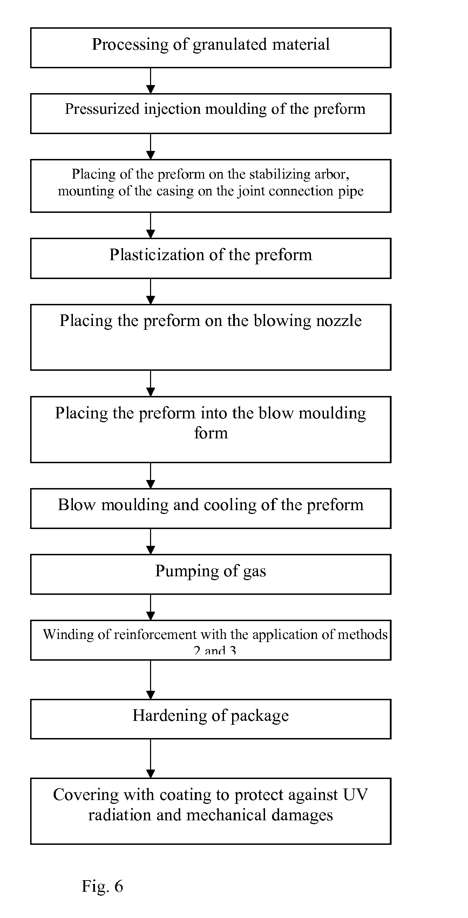

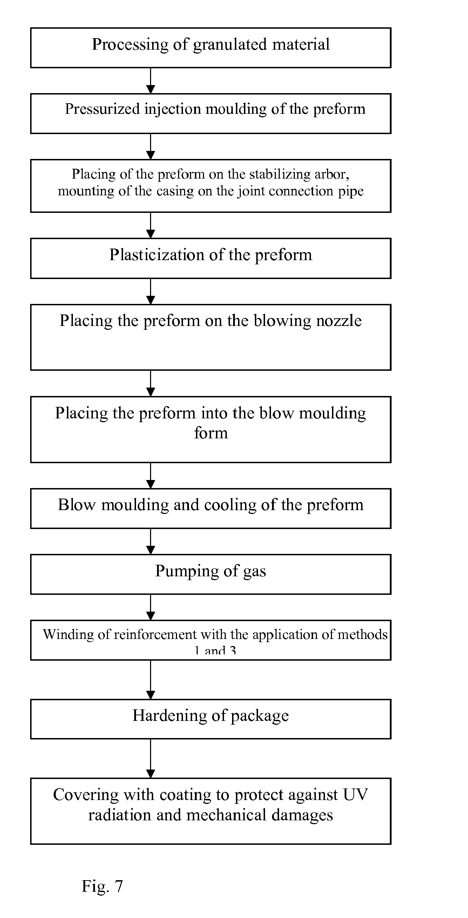

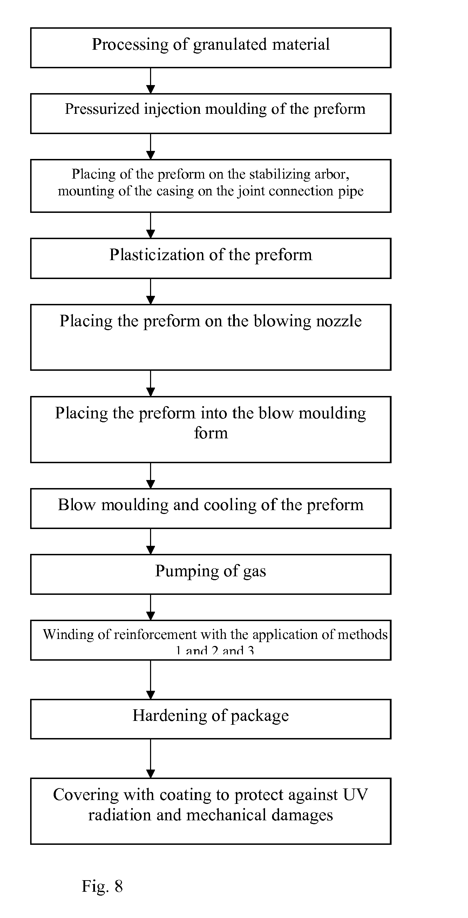

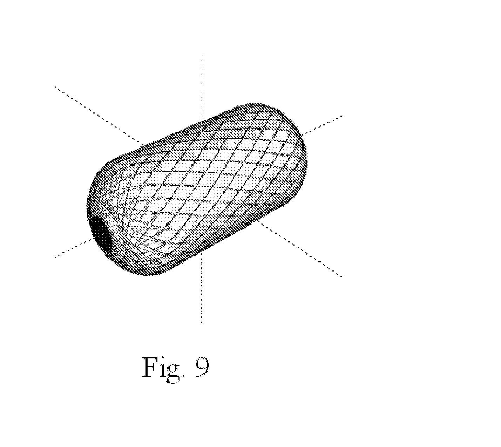

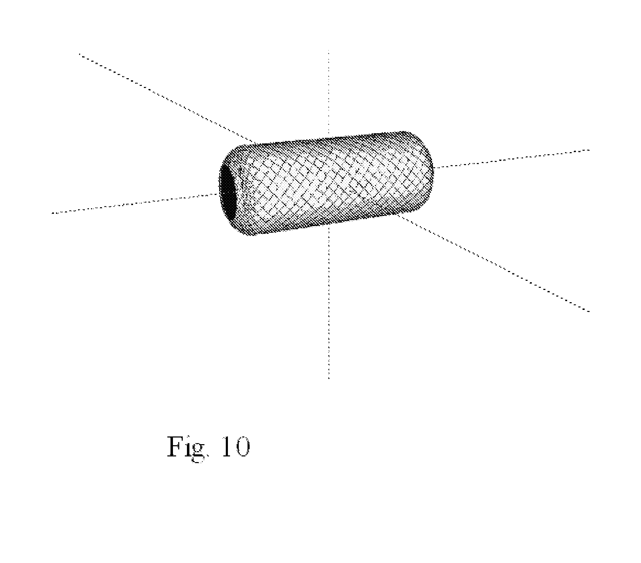

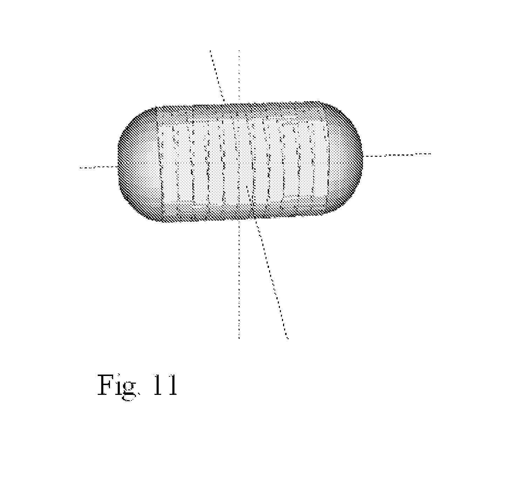

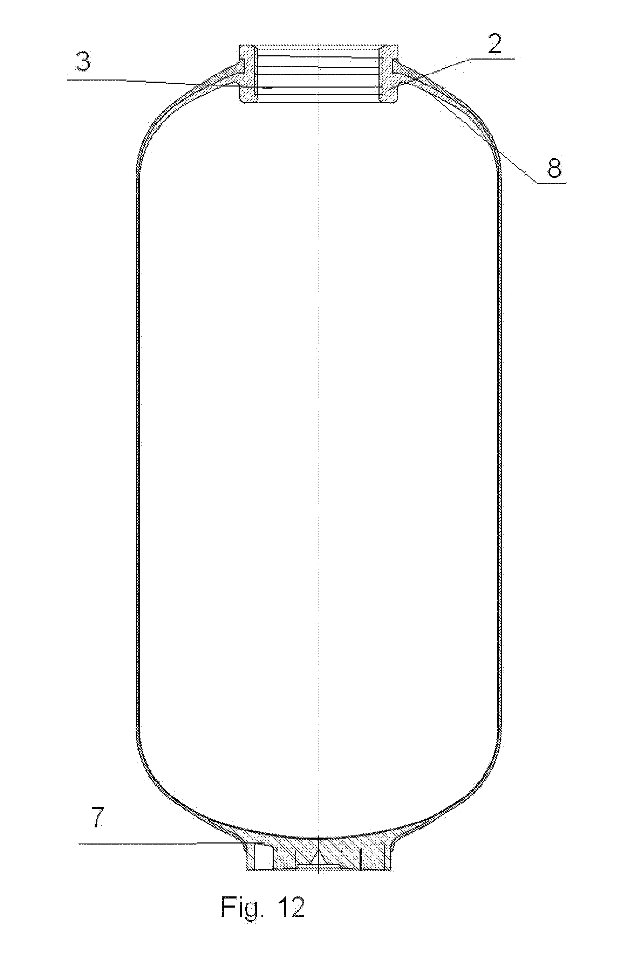

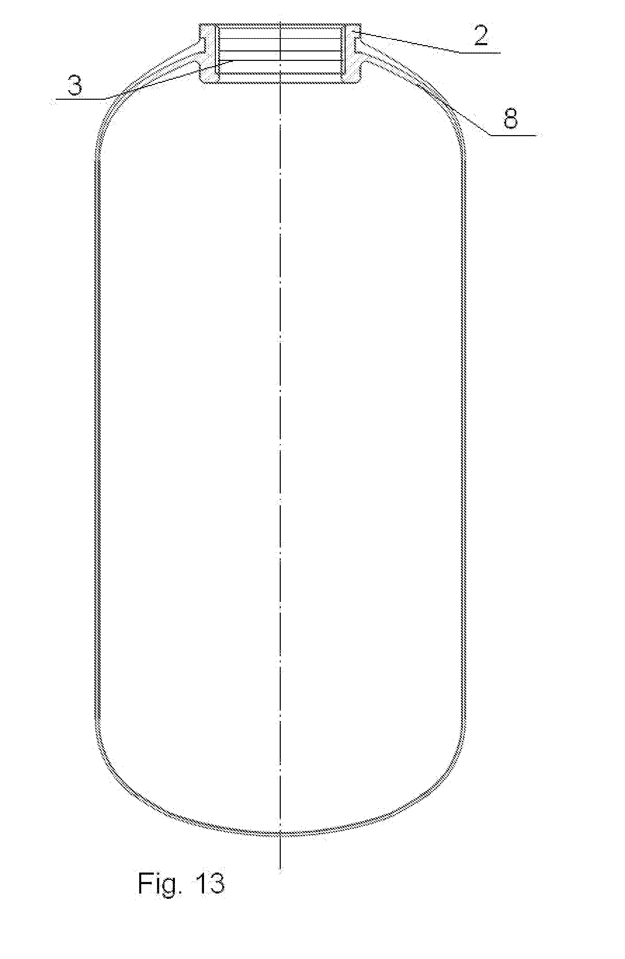

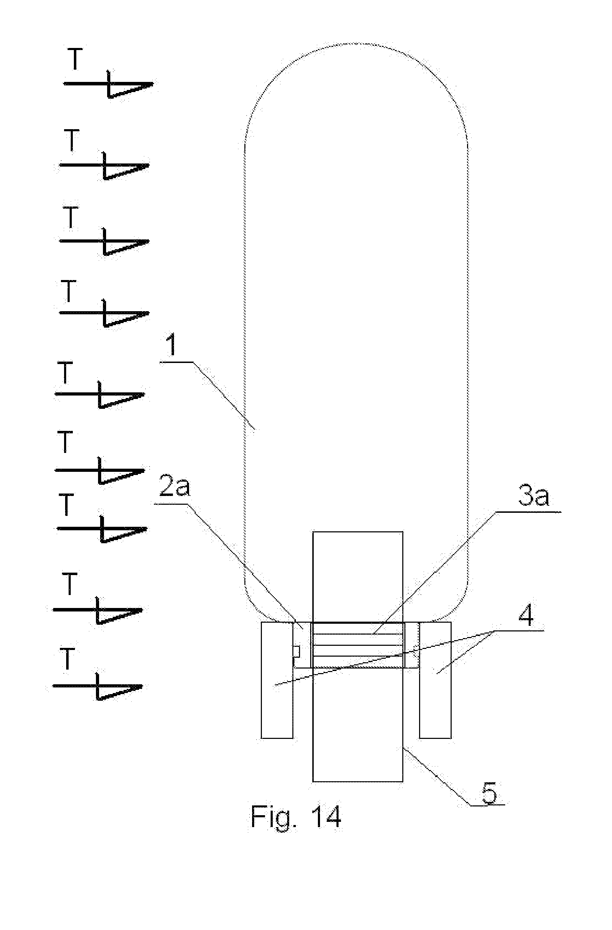

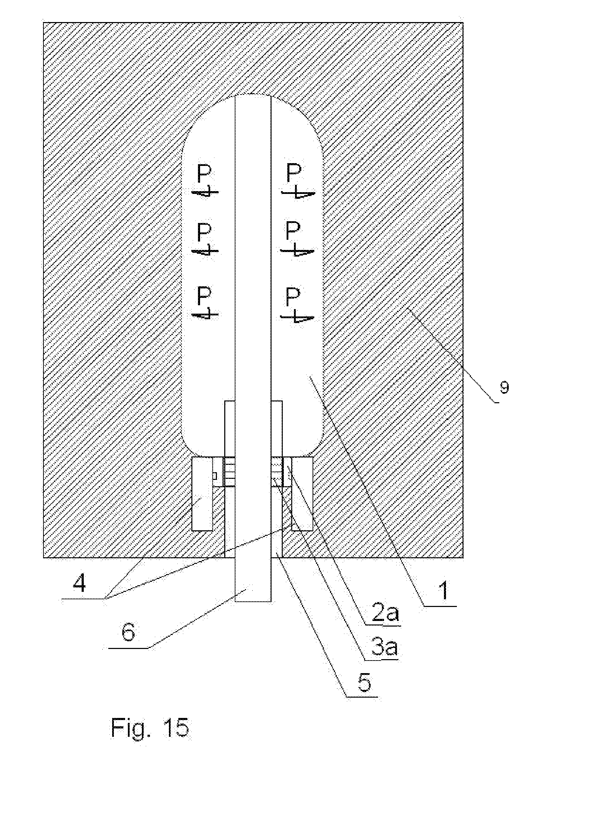

The method of manufacturing of the pressurized container in accordance with the invention has been presented in the figures, where the Fig.1 shows schematic run of the complete process in the first example of the method according to the invention, Fig. 2. shows schematic run of the complete process in the second example of the method according to the invention, Fig. 3. shows schematic run of the complete process in the third example of the method according to the invention , Fig. 4. shows schematic run of the complete process in the fourth example of the method according to the invention, Fig. 5. shows schematic run of the complete process in the fifth example of the method according to the invention, Fig. 6. shows schematic run of the complete process in the sixth example of the method according to the invention, Fig.7. shows schematic run of the complete process in the seventh example of the method according to the invention, Fig. 8. shows schematic run of the complete process in the eighth example of the method according to the invention, Fig.9 presents the polar method of fibre winding, Fig. 10 presents the cross method of fibre winding, Fig. 11 presents helical method of fibre winding. In the Fig. 12, cross-section through the container provided with additional profile is shown, and in the Fig. 13 - cross-section through the container without any additional profile is shown. In the Fig. 14 the preform placed on the blowing nozzle is presented whereas in the Fig. 15 - position of the preform within the blow moulding form is shown.

### Example I

The preform 1 provided for the process, manufactured in the process of granulate processing, formed with the application of pressurized injection moulding, placed on the blowing nozzle 5, and the joint connection pipe 2 situated directly on the nozzle is provided with the internal thread 3 (the same as this one, the preform is provided with), is surrounded with the casing 4, which is preferably cooled. The casing 4 has a shape of the flange surrounding the joint connection pipe 2. This flange constitutes the construction element of the furnace, in which blow moulding of the preform 1 is carried out. The cooling flange is made in such a way, that in its inside a liquid coolant is flowing. Before being placed in a zone of blow moulding, the preform 1 is pre-heated to a temperature close to plasticization temperature of this material, from which the preform is made. Construction of the furnace where blow moulding of the preform 1 takes place enables to control temperature in its different zones. This makes it possible to make, for example, a thicker bottom. Additionally, zones of heating the preform are arranged in such a way, that they enable adjustment of final product properties.

After pre-heating, the preform 1 is being placed on the blowing nozzle 5, provided with the casing 4/ the cooling flange collecting heat received from the joint connection pipe 2, and it is placed between two elements of the form, in which blow moulding of the preform 2 is carried out. Next, the elements of the form are being closed and through the blowing nozzle, gas is pumped into the inside of the preform 2. At the same time, in the course of blow moulding, heat is taken back from the preform 2 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping the gas, a manometric indicator to check leak tightness of the container.

After the inside of the container has been filled with pressurized gas, the container is submitted to the operation of reinforcing of its outside surface by means of winding fibres impregnated with resin. Fibres used for reinforcement are the fibres from the following set of fibres: glass or carbon or aramid or basalt or ceramide or several kinds of the above fibres at the same time. Reinforcing is being performed with the application of two methods, one following the other directly, depending on the required specifications of the final container, many times - the cross method, consisting in simultaneous rotation of the container or the winding head around the container and their mutual shift, an angle of inclination to axis of rotation falling within the range from 49° up to 59° and the polar method, according to which fibre is wound when the winding head moves between the poles of the container, and the above fibre passes every time around the joint connection pipe

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example II

The preform 1 provided for the process, manufactured in the process of granulate processing, formed with the application of pressurized injection moulding, placed on the blowing nozzle 5, and the joint connection pipe 2 situated directly on the blowing nozzle 5 is provided with the internal thread 3 (the same as this one, the preform 2 is provided with), is surrounded with the casing 4, which is preferably cooled. The casing 4 has a shape of the flange surrounding the joint connection pipe. This flange/casing 4 constitutes the construction element of the furnace, in which blow moulding of the preform 2 is carried out. The cooling casing/flange 4 is made in such a way, that in its inside a liquid coolant is flowing. Before being placed in a zone of blow moulding, the preform 2 is pre-heated to a temperature close to plasticization temperature of this material, from which the preform is made. Construction of the furnace where blow moulding of the preform 2 takes place, enables to control temperature in its different zones. This makes it possible to make, for example, a thicker bottom. Additionally, zones of heating the perform 2 are arranged in such a way, that they enable adjustment of final product properties.

After pre-heating, the preform 2 is being placed on the blowing nozzle 5, provided with the cooling flange collecting heat received from the joint connection pipe 2, and it is placed between two elements of the form, in which blow moulding of the preform 1 is carried out. Next, the elements of the form are being closed and through the blowing nozzle 5, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing. Fibres used for reinforcement are the fibres from the following set of fibres: glass or carbon or aramid or basalt or ceramide or several kinds of the above fibres at the same time. Reinforcing is being performed with the application of two methods, one following the other directly, depending on the required specifications of the final container, many times - the polar method, according to which fibre is wound when the winding head moves between the poles of the container, and the above fibre passes every time around the joint connection pipe

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example III

The preform 1 provided for the process, manufactured in the process of granulate processing, formed with the application of pressurized injection moulding, placed on the blowing nozzle 5, and the joint connection pipe 2 situated directly on the nozzle is provided with the thread 3 (the same as this one, the preform 1 is provided with), is surrounded with the casing 4, which is preferably cooled. The casing/flange 4 has a shape of the flange surrounding the joint connection pipe. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform is made. Construction of the furnace where blow moulding of the preform 1 takes place, enables to control temperature in its different zones. This makes it possible to make, for example, a thicker bottom. Additionally, zones of heating the preform are arranged in such a way, that they enable adjustment of final product properties.

After pre-heating, the preform 1 is being placed on the blowing nozzle 5, provided with the cooling flange collecting heat received from the joint connection pipe, and it is placed between two elements of the form, in which blow moulding of the preform 1 is carried out. Next, the elements of the form are being closed and through the blowing nozzle, gas is forced into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping the gas, a manometric indicator to check leak tightness of the container.

After the inside of the container has been filled with pressurized gas , the container is submitted to the operation of reinforcing. Fibres used for reinforcement are fibres from the following set of fibres: glass or carbon or aramid or basalt or ceramide or several kinds of the above fibres at the same time. Reinforcing is being performed with the application of two methods, one following the other directly, depending on the required specifications of the final container, many times - the cross method, consisting in simultaneous rotation of the container or the winding head around the container and their mutual shift (angle and pitch), an angle of inclination to axis of rotation falling within the range from 49° up to 59° and the helical method, consisting in reinforcement of the cylindrical part of the container.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example IV

The preform 1 provided for the process, manufactured in the process of granulate processing, formed with the application of pressurized injection moulding, placed on the blowing nozzle 5, and the joint connection pipe 2 situated directly on the nozzle is provided with the thread 3 (the same as this one, the preform 1 is provided with), is surrounded with the casing 4, which is preferably cooled. The casing 4 has a shape of the flange surrounding the joint connection pipe . This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place enables to control temperature in its different zones. This makes it possible to make, for example, a thicker bottom. Additionally, zones of heating the preform 1 are arranged in such a way, that they enable adjustment of final product properties.

After pre-heating, the preform 1 is being placed on the blowing nozzle 5, provided with the cooling flange 4 collecting heat received from the joint connection pipe 2, and it is placed between two elements of the form, in which blow moulding of the preform 1 is carried out. Next, the elements of the form are being closed and, through the blowing nozzle, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping the gas, a manometric indicator to check leak tightness of the container.

After the inside of the container has been filled with pressurized gas , the container is submitted to the operation of reinforcing .Fibres used for reinforcement are the fibres from the following set of fibres: glass or carbon or aramid or basalt or ceramide or several kinds of the above fibres at the same time. Reinforcing is being performed with the application of three methods, one following the other directly, depending on the required specifications of the final container, many times - the cross method, consisting in simultaneous rotation of the container or the winding head around the container and their mutual shift (angle and pitch), an angle of inclination to axis of rotation falling within the range from 49° up to 59° and the helical method, consisting in reinforcement of the cylindrical part of the container as well as the polar method, according to which fibre is wound when the winding head moves between the poles of the container, and the above fibre passes every time around the joint connection pipe

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example V

The preform 1 provided for the process, manufactured in the process of granulate processing, formed with the application of pressurized injection moulding, is placed on the stabilizing arbor 6, and the joint connection pipe 2 situated directly on the stabilizing arbor 6 is provided with the thread 3 (the same as this one, the preform is provided with), is surrounded with the casing 4, which is preferably cooled. The casing 4 has a shape of the flange surrounding the joint connection pipe. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe 2. Then, it is placed between two elements of the form, in which blow moulding of the preform 1 is carried out. Next, the elements of the form are being closed and, through the blowing nozzle, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing .Fibres used for reinforcement are the fibres from the following set of fibres: glass or carbon or aramid or basalt or ceramide or several kinds of the above fibres at the same time. Reinforcing is being performed with the application of two methods, one following the other directly, depending on the required specifications of the final container, many times - the cross method, consisting in simultaneous rotation of the container or the winding head around the container and their mutual shift (angle and pitch), an angle of inclination to axis of rotation falling within the range from 49° up to 59° and the polar method, according to which fibre is wound when the winding head moves between the poles of the container, and the above fibre passes every time around the joint connection pipe

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example VI

The preform 1 provided for the process, manufactured in the process of granulate processing, formed with the application of pressurized injection moulding, is placed on the stabilizing arbor 6, and the joint connection pipe 2 situated directly on the stabilizing arbor 6 is provided with the thread 3 (the same as this one, the preform is provided with), is surrounded with the casing 4, which is preferably cooled. The casing 4 has a shape of the flange surrounding the joint connection pipe. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe 2. Then, it is placed between two elements of the form, in which blow moulding of the preform 1 is carried out. Next, the elements of the form are being closed and, through the blowing nozzle 5, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing .Fibres used for reinforcement are the fibres from the following set of fibres: glass or carbon or aramid or basalt or ceramide or several kinds of the above fibres at the same time. Reinforcing is being performed with the application of two methods, one following the other directly, depending on the required specifications of the final container, many times - the polar method, according to which fibre is wound when the winding head moves between the poles of the container, and the above fibre passes every time around the joint connection pipe and the helical method, consisting in reinforcement of the cylindrical part of the container.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example VII

The preform 1 provided for the process, manufactured in the process of granulate processing, formed with the application of pressurized injection moulding, is placed on the stabilizing arbor 6, and the joint connection pipe 2 situated directly on the stabilizing arbor 6 is provided with the thread 3 (the same as this one, the preform is provided with), is surrounded with the casing 4, which is preferably cooled. The casing 4 has a shape of the flange surrounding the joint connection pipe 2. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe 2. Then, it is placed between two elements of the form, in which blow moulding of the preform 1 is carried out. Next, the elements of the form are being closed and, through the blowing nozzle 2, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing. Fibres used for reinforcement are the fibres from the following set of fibres: glass or carbon or aramid or basalt or ceramide or several kinds of the above fibres at the same time. Reinforcing is being performed with the application of two methods, one following the other directly, depending on the required specifications of the final container, many times - the cross method, consisting in simultaneous rotation of the container or the winding head around the container and their mutual shift (angle and pitch), an angle of inclination to axis of rotation falling within the range from 49° up to 59° and the helical method, consisting in reinforcement of the cylindrical part of the container.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example VIII

The preform 1 provided for the process, manufactured in the process of granulate processing, formed with the application of pressurized injection moulding, is placed on the stabilizing arbor 6, and the joint connection pipe 2 situated directly on the stabilizing arbor 6 is provided with the thread 3 (the same as this one, the preform 1 is provided with), is surrounded with the casing 4, which is preferably cooled. The casing 4 has a shape of the flange surrounding the joint connection pipe 2. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe. Then, it is placed between two elements of the form, in which blow moulding of the preform 1 is carried out. Next, the elements of the form are being closed and, through the blowing nozzle, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing . Fibres used for reinforcement are the fibres from the following set of fibres: glass or carbon or aramid or basalt or ceramide or several kinds of the above fibres at the same time. Reinforcing is being performed with the application of three methods, one following the other directly, depending on the required specifications of the final container, many times - the cross method, consisting in simultaneous rotation of the container or the winding head around the container and their mutual shift (angle and pitch), an angle of inclination to axis of rotation falling within the range from 49° up to 59° and the helical method, consisting in reinforcement of the cylindrical part of the container as well as the polar method, according to which fibre is wound when the winding head moves between the poles of the container, and the above fibre passes every time around the joint connection pipe.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example IX

The preform 1 provided for the process, manufactured in the process of granulate processing, formed with the application of pressurized injection moulding, is placed on the stabilizing arbor 6, and the joint connection pipe 2 situated directly on the stabilizing arbor 6 is (the same as this one, the perform 1 is provided with), is surrounded with the casing 4, which is preferably cooled. The casing 4 has a shape of the flange surrounding the joint connection pipe 2. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe. Then, it is placed between two elements of the form, in which blow moulding of the preform 1 is carried out. Next, the elements of the form are being closed and, through the blowing nozzle 5, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the inside of the formed container is filled with gas - air, which stiffens surfaces of the container, preventing them from indentation into the inside of the container. Value of pressure inside the container is strictly adjusted and it is not less than 2 bars. This stage of the manufacturing process being run in accordance with the invention is, at the same time, considered to be the stage of quality control of the manufactured container. It is possible to connect to the valve pumping gas, a manometric indicator to check leak tightness of the container.

After the inside of the container has been filled with pressurized gas, the container is submitted to the operation of reinforcing .Fibres used for reinforcement are fibres from the following set of fibres: glass or carbon or aramid or basalt or ceramide or several kinds of the above fibres at the same time. Reinforcing is being performed with the application of three methods, one following the other directly, depending on the required specifications of the final container, many times - the cross method, consisting in simultaneous rotation of the container or the winding head around the container and their mutual shift (angle and pitch), with an angle of inclination equal to 54° and the helical method, consisting in reinforcement of the cylindrical part of the container as well as the polar method, according to which fibre is wound when the winding head moves between the poles of the container, and the above fibre passes every time around the joint connection pipe.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Example X

The preform 1 provided for the process, manufactured in the process of granulate processing, formed with the application of pressurized injection moulding, is placed on the stabilizing arbor 6, and the joint connection pipe 2 situated directly on the stabilizing arbor 6 is (the same as this one, the perform 1 is provided with), is surrounded with the casing 4, which is preferably cooled. The casing 4 has a shape of the flange surrounding the joint connection pipe. This casing/flange 4 constitutes the construction element of the furnace, in which blow moulding of the preform 1 is carried out. The cooling casing/flange 4 is made in such a way, that in its inside a liquid coolant is flowing. Before being placed in a zone of blow moulding, the preform 1 is pre-heated to a temperature close to plasticization temperature of this material, from which the preform 1 is made. Construction of the furnace where blow moulding of the preform 1 takes place, enables to control temperature in its different zones. This makes it possible to make, for example, a thicker bottom. Additionally, zones of heating the preform 1 are arranged in such a way, that they enable adjustment of final product properties.

After pre-heating, the preform 1 placed on the stabilizing arbor 6 is taken out of it and placed on the blowing nozzle 5 provided with the cooling flange 4, collecting heat received from the joint connection pipe. Then, it is placed between two elements of the form, in which blow moulding of the preform 1 is carried out. Next, the elements of the form are being closed and, through the blowing nozzle 5, gas is pumped into the inside of the preform 1. At the same time, in the course of blow moulding, heat is taken back from the preform 1 in an active way. Cooling is realized through the liquid flow (water is this liquid) within the elements of the blow moulding form.

After the blow moulded preform 1 has left the form and the furnace, the container placed on the blowing nozzle 5 is being held by the additional profile 7, thanks to which the container remains stabile during reinforcing.

After the inside of the container has been filled with pressurized gas, the container is submitted to the operation of reinforcing .Fibres used for reinforcement are fibres from the following set of fibres: glass or carbon or aramid or basalt or ceramide or several kinds of the above fibres at the same time. Reinforcing is being performed with the application of three methods, one following the other directly, depending on the required specifications of the final container, many times - the cross method, consisting in simultaneous rotation of the container or the winding head around the container and their mutual shift (angle and pitch), with an angle of inclination to axis of rotation equal to 54° and the helical method, consisting in reinforcement of the cylindrical part of the container as well as the polar method, according to which fibre is wound when the winding head moves between the poles of the container, and the above fibre passes every time around the joint connection pipe.

Individual packages of fibres are separated with a layer of resin from the set of polyester or epoxy resins. Depending on the kind of the used resin, the container wrapped with fibre passes to the furnace with the purpose to harden resin or is subject to an action of chemo hardener.

After the resin has been hardened, the container is covered with the coating protecting it against action of UV radiation and impact strength.

### Listing of terms

1. preform
2. joint connection pipe of the container 2a joint connection pipe of the preform
3. internal thread 3a internal thread of the preform
4. cooling casing/cooling flange
5. blowing nozzle
6. stabilizing arbor
7. additional profile
8. container
9. form P -pressurized gas t- heating

## Claims

1. The method of manufacturing of multi-layer container, especially to store liquids and gases under higher pressure, **characterized in that** in the first stage it includes manufacturing of the component made out of thermoplastic material in a form of the preform land the preform 1 is provided with the joint connection pipe 2a with the thread 3a, and dimension of the joint connection pipe 2a of the preform 1 and the shape of the thread 3a corresponds to the dimension of the joint connection pipe 2 of the container and to the shape of the container thread 3 of the container 8; in the second stage, the manufactured preform 1 is being thermally plasticized by placing it on the arbor 6, and then - it is being heated the furnace to the temperature close to plasticization temperature of this material, from which the preform is made and the joint connection pipe 2a situated directly on the arbor 6 is surrounded with the casing 4; in the third stage, the preform being placed on the blowing nozzle 5, with the cooling flange 4 collecting the heat received from the joint connection pipe 2a, is then placed between at least two elements of the form 9, in which blow moulding of the preform 1to reach a form of the container 8 is carried out; in the fourth stage, after the container 8 has left the form and the furnace, the container 8 is fixed in a way enabling its reinforcement in the fifth stage, when the container 8 is submitted to the operation of reinforcing of its outside surface by means of winding fibres impregnated with resin; in the sixth stage, after the resin has been hardened, the container is coated with an additional protective layer.

2. The method according to the claim 1, **characterized in that** the perform 1 is made out of PET material.

3. The method according to the claim1 and 2, **characterized in that** the thread 3a of the joint connection pipe 2a is made on the internal surface of the joint connection pipe 2a.

4. The method according to the claims from 1 to 3, **characterized in that** the stabilizing arbor 6 functions as the blowing nozzle 5.

5. The method according to the claims from 1 to 4, **characterized in that** the casing 4 has a form of the flange surrounding the joint connection pipe.

6. The method according to the claims from 1 to 5, **characterized in that** the casing of the joint connection pipe is being cooled down to a temperature, which is lower than the plasticization temperature of the preform 1.

7. The method according to the claim 6, **characterized in that** inside the casing 4 a liquid coolant is flowing, in particular this is water.

8. The method according to the claims from1 to 7, **characterized in that** the casing 4 constitutes the construction element of the furnace, in which blow moulding of the preform 1 is carried out.

9. The method according to the claim 8, **characterized in that** in the furnace where heating of the preform 1 is carried out, it is possible to control temperature in its different zones.

10. The method according to the claim 9, **characterized in that** in the course of blow moulding, heat is taken back from the form in an active way.

11. The method according to the claim 10, **characterized in that** the taking the heat back is realized through the liquid flow.

12. The method according to the claim 11, **characterized in that** this liquid is water.

13. The method according to the claims from1 to 12, **characterized in that** for reinforcement of the outer surfaces, hardening resins including fibres from the following set of fibres: glass or carbon or aramid or basalt or ceramide or several kinds of the above fibres at the same time are used.

14. The method according to the claims from 1 to 13, **characterized in that** reinforcing is being performed at least once and with the application of at least two methods from among three considered: the cross method consisting in simultaneous rotation of the container 8 or the winding head around the container and shift of the head alongside the length of the container reaching an angle of inclination falling within the range from 49° up to 59°, the polar method according to which fibre is wound when the winding head moves between the poles of the container, and the above fibre passes every time around the joint connection pipe; the helical method, consisting in reinforcement of the cylindrical part of the container.

15. The method according to the claims from 1 to 14, **characterized in that** the individual packages of fibres are separated with chemo -or thermo hardening resin.

16. The method according to the claims from 1 to 15, **characterized in that** the protective coating is made by means of spreading the substance with such properties, which enable lowering effects of action of UV radiation, water, chemical substances and imparting impact strength.

17. The method according to the claims from1 to 16, **characterized in that** the inside of the container 8 formed from the blow moulded preform 1, is filled with gas, which stiffens surfaces of the container, preventing them from indentation into the inside of the container, and the value of pressure inside the container is strictly adjusted and equals to not less than 2 bars.

18. The method according to the claims from 1 to 17, **characterized in that** the bottom of the container 8 is provided with the fixing profile 7.

19. The multi-layer container, especially to store liquids and pressurized gases, **characterized in that that** it consists of the container 8 formed from the blow moulded preform 1, ended with the joint connection pipe 2, which is connected homogeneously with the same container 8 and the surface of the container 8 is reinforced with the package composed of hardening resins with fibres from the following set of fibres: glass or carbon or aramid or basalt or ceramide or several kinds of the above fibres at the same time and such reinforcing is performed at least once and with the application of at least two methods from among three considered: the cross method consisting in simultaneous rotation of the container 8 or the winding head around the container and Shift of the head alongside the length of the container reaching an angle of inclination falling within the range from 49° up to 59°, the polar method according to which fibre is wound when the winding head moves between the poles of the container, and the above fibre passes every time around the joint connection pipe; the helical method, consisting in reinforcement of the cylindrical part of the container.

20. The container according to the claim 19, **characterized in that** the preform is made out of PET material.

21. The method according to the claims 19 or 20, **characterized in that** the thread 3 of the joint connection pipe 2 in made on the internal surface of the joint connection pipe 2.
